# EUROPEAN PATENT SPECIFICATION

(11) **EP 4 568 356 B1**
(45) Date of publication and mention of the grant of the patent: **04.02.2026**
(21) Application number: 23215243.9
(22) Date of filing: 08.12.2023
(51) Int. Cl.: H04W 48/20, H04W 76/10, H04W 48/12, H04W 84/06

(54) **METHOD FOR COMMUNICATION OF A USER EQUIPMENT WITH A SPECIFIC BASE STATION ENTITY**
VERFAHREN ZUR KOMMUNIKATION EINES TEILNEHMERGERÄTES MIT EINER SPEZIFISCHEN BASISSTATION
RÉSEAU DE COMMUNICATION MOBILE, ÉQUIPEMENT UTILISATEUR, SYSTÈME OU RÉSEAU DE COMMUNICATION MOBILE, PROGRAMME ET SUPPORT LISIBLE PAR ORDINATEUR

(43) Date of publication of application: 11.06.2025
(73) Proprietor: Deutsche Telekom AG, 53113 Bonn (DE)
(72) Inventor: KLATT, Axel, 50999 Köln (DE)
(74) Representative: Schwöbel, Thilo K.

(56) References cited:
- WO-A1-2022/208475
- WO-A1-2023/208862
- US-A1- 2023 300 700
- GOOGLE INC: "Discussion on the UE Unreachability Periods", vol. RAN WG2, no. Electronic Meeting; 20230417 - 20230426, 7 April 2023 (2023-04-07), XP052366335, Retrieved from the Internet <URL:https://ftp.3gpp.org/tsg_ran/WG2_RL2/TSGR2_121bis-e/Docs/R2-2304081.zip R2-2304081 Discussion on the UE Unreachability Periods.docx> [retrieved on 20230407]
- INTERDIGITAL (RAPPORTEUR): "Report of [AT121bis-e][115][IoT NTN Enh] Discontinuous coverage enhancements (Interdigital)", vol. RAN WG2, no. eMeeting; 20230417 - 20230426, 25 April 2023 (2023-04-25), XP052479691, Retrieved from the Internet <URL:https://ftp.3gpp.org/tsg_ran/WG2_RL2/TSGR2_121bis-e/Inbox/R2-2304258.zip R2-2304258 offine115 IoT-NTN discontinuous coverage_summary.docx> [retrieved on 20230425]
- CHADI KHIRALLAH ET AL: "Enhancements to discontinuous coverage", vol. 3GPP RAN 2, no. Online; 20230417 - 20230426, 7 April 2023 (2023-04-07), XP052289456, Retrieved from the Internet <URL:https://www.3gpp.org/ftp/TSG_RAN/WG2_RL2/TSGR2_121bis-e/Docs/R2-2303052.zip R2-2303052.docx> [retrieved on 20230407]

## Description

### BACKGROUND

The present invention relates a method for communication of a user equipment with a specific base station entity of a radio access network of, or associated or assigned to, a mobile communication network, wherein the user equipment receives, from the base station entity, system information as part of, or using, a broadcast channel, wherein a specific coverage time information indicating a specific point in time when the user equipment is provided, by the specific base station entity, with sufficiently strong radio coverage , is to be transmitted, by the user equipment, to the specific base station entity.

Furthermore, the present invention relates to a user equipment for communicating with a specific base station entity of a radio access network of a mobile communication network, wherein the user equipment is configured to receive, from the specific base station entity, system information as part of, or using, a broadcast channel, wherein a specific coverage time information indicating a specific point in time when the user equipment is provided, by the specific base station entity, with sufficiently strong radio coverage, is to be transmitted from the user equipment to the specific base station entity.

Additionally, the present invention relates to a system or mobile communication network for communication of a user equipment with a specific base station entity of a radio access network of the mobile communication network, the system or mobile communication network comprising the user equipment and the specific base station entity, wherein the specific base station entity is configured to transmit system information as part of, or using, a broadcast channel,
wherein a specific coverage time information, indicating a specific point in time when the user equipment is provided, by the specific base station entity, with sufficiently strong radio coverage, is to be transmitted, by the user equipment, to the specific base station entity.

Furthermore, the present invention relates to a program and to a computer-readable medium for communication of a user equipment with a specific base station entity of a radio access network of, or associated or assigned to, a mobile communication network according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G radio access technologies (referring to the different generations of radio access technologies) and typically comprise (or consist of) cells (or radio cells) of one or a plurality of the respective radio access technology/radio access technologies. Such mobile communication networks - that are purely or predominantly based on terrestrial infrastructures of the radio access network - are typically organized throughout a country (or throughout a part thereof or throughout a region within a country) in a repeating pattern of typically stationary (radio) cells (and associated base station entities) which typically belong to (or are used by or associated or assigned to) a mobile network operator (MNO).
Modern mobile communication networks, such as 5G systems, especially using 5G NR (new radio) radio (access) technology, are evolving using air-based and/or space-based infrastructure, hence relying, at least partly, on non-terrestrial infrastructure, especially in the form of satellites and/or high altitude platforms, HAPs, thereby realizing non-terrestrial networks, NTN (or satellite communication networks). Examples of such air-based and/or space based network infrastructure include, e.g., mobile satellite connectivity with low earth orbit (LEO) satellites, medium earth orbit (MEO) satellites and/or geostationary earth orbit (GEO) satellites and also so-called high altitude platforms or high altitude pseudo-satellites (HAPS).
Such non-terrestrial networks are able to provide global cellular connectivity to handheld devices or user equipments, typically using satellite or HAP coverage with quasi earth fixed beams (i.e. radio coverage being provided for a (quasi) fixed geographical area until a certain point in time) or using earth-moving beams (i.e. radio coverage being provided in a (continuously) moving geographical area, or earth-moving radio cell, that is moving, relative to the earth surface, together with the movement of the satellite or the high altitude platform device)).
Irrespective of which type of radio coverage (i.e. quasi earth fixed or earth-moving) is used, due to the comparatively high relative velocities involved when satellites and/or high-altitude platforms are used (at least compared to typical (passenger) transportation velocities on earth, but also in an aviation context), it would often be possible to estimate - based on the knowledge of the current position of a considered user equipment - a relatively good approximation of the remaining service time period, i.e. the point in time when radio coverage between such a considered user equipment and a specific part of a non-terrestrial network infrastructure (such as a specific satellite or a specific high-altitude platform) will end (or will be lost or is about to be lost).
Besides when non-terrestrial networks are (or network infrastructure is) involved, the same (i.e. the possibility to estimate a relatively good approximation, based on the knowledge of the current position of the considered user equipment, of the remaining service time period) is also applicable or possible, at least in principle, to the situation of a considered user equipment being served by terrestrial network infrastructure (i.e. a terrestrial base station entity) in case that such a user equipment moves with a relatively elevated (transportation) velocity (and also along comparatively well predetermined paths - which often correlates with having (or achieving) higher (transportation) velocities), e.g. in cars (especially on motorways - apart from traffic jams) or in (high-speed) trains.

Previously, in WO 2023/208862 A1 it was described how a user equipment uses its own position (determined via GNSS) relative to a reference location to compute its own specific service time interval.

Furthermore, 3GPP R2-2304081 described predicting and managing out-of-coverage periods, especially for power saving and mobility emphasizing Access Stratum-to-NAS signaling.

However, typically in view of privacy considerations, such knowledge of the current position of the considered user equipment (i.e. a relatively precise position, e.g. in the form of a global navigation satellite system-position of the user equipment) is, typically, not transmitted (or provided), by the user equipment, to the respective serving base station entity - at least not using control plane communication like access stratum (or non-access stratum) or radio resource control (RRC) communication - (i.e. the serving base station entity as a part of the serving non-terrestrial network infrastructure (i.e. the satellite or the high-altitude platform) or as part of the terrestrial network infrastructure), and, thus, the serving base station entity is, typically, not able to estimate the point in time when radio coverage is likely to be lost to the considered user equipment it is currently serving.

### SUMMARY

An object of the present invention is to provide a technically simple, effective and cost-effective solution such that the privacy considerations are able to be respected while nevertheless providing - to a base station entity that is serving a considered user equipment - the possibility to estimate the point in time when radio coverage, provided by the serving base station entity to such considered user equipment, will end (or will be lost or is about to be lost), i.e. the possibility to estimate the remaining service time period. A further object of the present invention is to provide a corresponding user equipment, system or mobile communication network, and a corresponding program and computer-readable medium.

The object of the present invention is achieved by a a method, a user equipment, a system or mobile communication network, a program and a computer-readable medium as set forth in the claims.

A first aspect of the invention comprises a method as set forth in claim 1, i.e. a method for communication of a user equipment with a specific base station entity of a radio access network of, or associated or assigned to, a mobile communication network , wherein the user equipment receives, from the base station entity, system information as part of, or using, a broadcast channel,
wherein a specific coverage time information indicating a specific point in time when the user equipment is provided, by the specific base station entity, with sufficiently strong radio coverage, is to be transmitted, by the user equipment, to the specific base station entity,
wherein in order to determine the specific point in time when the user equipment is provided with sufficiently strong radio coverage by the specific base station entity and in order to be able to transmit the specific coverage time information, the method being executed by the user equipment comprises the following steps:
   -- in a first step, the user equipment receives radio signals indicative of the broadcast channel of the specific base station entity,
   -- in a second step, at a subsequent point in time and upon the user equipment initiating to be connected with the specific base station entity, the user equipment transmits, as part of the connection establishment procedure, at least one radio resource control message to the specific base station entity, wherein the user equipment transmits the specific coverage time information as part of the at least one radio resource control message and wherein the specific coverage time information indicates the specific point in time when the user equipment detects the received radio signals of the specific base station entity as being sufficiently strong.

It is thereby advantageously possible according to the present invention to transmit - to the (serving) specific base station entity, and by a considered user equipment - an information regarding the point in time when the considered user equipment (upon entering radio coverage area of the specific base station entity) did receive the radio signals (indicative of the broadcast channel) of that specific base station entity as being sufficiently strong.
From that information (or that point in time), i.e. comprised by or indicated by the specific coverage time information, the base station entity is able (at least in most cases) to determine, or to estimate, (at least approximately) the point in time when radio coverage (provided by the serving base station entity to such considered user equipment) will end (or will be lost or is about to be lost), i.e. from the specific coverage time information, the base station entity is able to estimate the remaining service time period regarding the considered user equipment and regarding the currently considered radio coverage area of the base station entity (i.e. the one of a terrestrial base station entity, or - in case non-terrestrial network infrastructure is used - the one that is currently provided by a specific antenna entity or functionality aboard a satellite or a high-altitude platform). The timing information regarding when the radio signals (indicative of the broadcast channel) of the specific base station entity were received, by the user equipment, as being sufficiently strong (and, also, the estimate regarding the remaining service time period of the considered user equipment) can be beneficially used by the serving base station entity (i.e. the terrestrial radio access network or the satellite access network (SAN), especially for radio resource management RRM decisions and/or for mobility-related decisions (especially related to the considered user equipment).

Hence, according to the present invention, it is advantageously possible to provide a method for the transmission, by a considered user equipment, of a timing information regarding when the radio signals (indicative of the broadcast channel) of the specific base station entity were sufficiently strong - and this both in the situation of the user equipment being served by a non-terrestrial network (especially with earth moving radio cells) as well as by a terrestrial network.
Thus, it is advantageously possible, according to the present invention, to provide a standardized method that allows the considered user equipment - once an attempt to be connected to a radio cell of a radio access network (e.g. a satellite access network (SAN) or a terrestrial radio access network) is initiated - to indicate at which point in time (hereinafter also called T_{RAN/SAN_Enter}) the considered user equipment has received the current serving radio cell (i.e. the radio coverage area (presently) provided by the base station entity or by the base station entity via the same satellite or high-altitude platform) for the first time. This is able to be an absolute time (UTC = ddmmyyyyhhmmss based on UTC seconds in 10 ms units since 00:00:00 on Gregorian calendar date 1 January, 1900 (midnight between Sunday, December 31, 1899 and Monday, January 1, 1900) or a relative time (e.g. in milliseconds before T_{RAN/SAN_access}, i.e. the point in time when the considered user equipment requests to be connected to the specific base station entity). This point in time, i.e. T_{RAN/SAN_Enter}, will need to be stored while the user equipment is in idle mode.

It is especially advantageous that - based on being informed (from the considered user equipment, and by means of the specific coverage time information) on a timing information regarding when the radio signals (indicative of its broadcast channel) were sufficiently strong - the specific base station entity (i.e. the terrestrial radio access network base station entity, or the satellite access network (SAN)) is able to calculate the exit time T_{RAN/SAN_Exit} of the considered user equipment without knowledge of the precise position on this user equipment; i.e. the considered user equipment does not reveal its own precise location for privacy reasons, and, thus, respects the corresponding privacy preservation rules. Without this timing information, the radio access network or satellite access network, SAN, would not have any valid information of the relative position on the user equipment inside the radio coverage area, i.e. inside a moving beam in case of satellite coverage.

The point in time indicated by the specific coverage time information (i.e. the point in time when the considered user equipment did enter the radio coverage area of the base station entity) does not need to be (and will, typically, not be) the same point in time when the considered user equipment initiates to be connected to the specific base station entity; however, as part of the connection establishment procedure, the specific coverage time information is (or is at least able to be) transmitted, indicating that prior point in time (when the considered user equipment did enter the radio coverage area of the base station entity); the indication of that prior point in time might be done by means of indicating that point in time in a rather absolute manner and/or explicitly (e.g., as mentioned, in remaining UTC seconds in 10 ms units since 00:00:00 on Gregorian calendar date 1 January, 1900) or in a rather relative manner, e.g. by means of indicating how long that prior point in time (when the considered user equipment did enter the radio coverage area of the base station entity) is separated from the point in time of the connection establishment procedure and/or of its initiation (that is, of course, known to the specific base station entity). The specific coverage time information is - as part of that second step, i.e. being the connection establishment procedure or its initiation - transmitted, by the considered user equipment and to the specific base station entity, as part of at least one radio resource control message.

The present invention is focused, regarding non-terrestrial networks, on low earth orbit (LEO) satellites or high-altitude platform entities which typically are located up to 300 km until 1500 km above ground (especially 800 km to 1000 km), and are, typically, traveling at a velocity of around 7 km/s, resulting in a round trip time about the globe of typically about 100 minutes. The coverage area of a low earth orbit satellite on the ground is typically a circle or an ellipse moving over the ground. 3GPP Release 17 and 18 support non-terrestrial networks with quasi earth stationary (or quasi earth fixed) as well as earth-moving radio cells from satellites. In low-earth orbits (LEO), the satellites are moving around the Earth with typical beam diameters of LEO satellites in the L- and S-bands between 20 km and 50 km (sometimes 100 km). This means that a user equipment on the ground will see an incoming radio cell, provided by a beam of such a LEO satellite (where one beam corresponds to one radio cell), and such a radio cell moves over the point where the user equipment is positioned in typically around 7 seconds or even less than 7 seconds.

In case of the considered user equipment being served by a satellite access network, satellites (or high altitude platform entities) provide comparatively small coverage areas (on the earth surface) via spotbeams (typically using a plurality of antennas, especially phased-array antennas), thereby especially increasing the system capacity; for the sake of simplicity, in the context of the present invention, it is assumed that one earth-moving radio cell or coverage area is provided by one satellite or high altitude platform device (i.e. a single spot beam per satellite or high altitude platform device).
The radio cell or coverage area is an earth-moving radio cell or coverage area, typically moving or travelling on the earth surface in unison with the movement of the satellite or high-altitude platform device. This means that a considered satellite or high-altitude platform device is able to provide coverage and/or service (or communication services) only during a defined period of time or time interval to a user equipment that is assumed being stationary or almost stationary (at least in comparison with the velocity of such satellites) on or above the earth surface.
This defined period of time or time interval of coverage or service, of course, depends on the size and/or geometry of the earth-moving radio cell or coverage area, and on the velocity and/or direction of movement and/or trajectory of the satellite or high altitude platform device above ground; however and regarding a considered user equipment, the specific service time interval (or time interval of service or radio coverage) able to be provided to that considered user equipment also depends on the relative position of the considered user equipment relative to the earth-moving radio cell or coverage area. According to the present invention, it is preferred that the specific base station entity (serving the considered user equipment) is able to compute or estimate (or to infer) the likely remaining service time period after having received the specific coverage time information; this is, especially, possible based on the knowledge (at the serving base station entity) of the parameters of the radio coverage area, i.e. the size and/or the geometry of the earth-moving radio cell or coverage area, and the velocity and/or direction of movement and/or trajectory of the satellite or high altitude platform device above ground.

Also in case of the considered user equipment being served by a terrestrial radio access network, it is also verified - at least in some or in specific configurations or geographic situations - that the specific base station entity (serving the considered user equipment) is able to compute or estimate (or to infer) the likely remaining service time period after having received the specific coverage time information; this might be less generally applicable (due, e.g., to differences regarding the physical signal propagation conditions of terrestrial base station entities compared to satellite-based base station entities or antenna entities or functionalities, and/or due to a greater influence of topological aspects (including vegetation and/or buildings) on signal propagation), however, especially in specific use cases or situations, an equally precise and reliable computation of the remaining service time period is possible. Such specific configurations or geographic situations especially apply along high-speed transportation corridors, such as roads (motorways), (high-speed) railway lines, or the like, where the specific base station entity has the knowledge (at the serving base station entity) of the parameters of the radio coverage area (with respect to the high-speed transportation corridor), i.e. the beginning and the end of the radio cell or coverage area along the considered transportation corridor.

According to the present invention, it is advantageously possible and preferred that the user equipment is, at least prior to initiating to be connected with the specific base station entity, in idle mode - or, RRC_INACTIVE, at least, not in connected mode.

It is thereby advantageously possible, according to the present invention, that - irrespective of when the user equipment initiates (or is triggered) to be connected to the (serving) specific base station entity - the specific base station entity is able to be informed, by the considered user equipment, about the specific coverage time information, and, hence, is able to infer the remaining service time period.

According to the present invention, it is advantageously furthermore possible and preferred that the user equipment starts a timer upon detecting the received radio signals of the specific base station entity as being sufficiently strong,
wherein especially the received radio signals are regarded as being sufficiently strong if at least one out of the following criteria are met:
   -- the received radio signals of the specific base station entity correspond to, or exceed, the S-criterion ,
   -- the received radio signals of the specific base station entity correspond to, or exceed, the cell selection criterion ,
   -- the received radio signals of the specific base station entity correspond to, or exceed, the cell reselection criterion regarding the specific base station entity,
wherein especially, the user equipment receives from a further specific base station entity of either the radio access network or of a radio access network of, or associated or assigned to, another mobile communication network further system information as part of, or using, a further broadcast channel, wherein a further specific coverage time information indicating a further specific point in time when the user equipment is provided, by the further specific base station entity, with sufficiently strong radio coverage, is to be transmitted, by the user equipment, to the further specific base station entity, wherein the user equipment starts a further timer upon detecting the received radio signals of the further specific base station entity as being sufficiently strong, and, if applicable, upon the user equipment initiating to be connected with the further specific base station entity, the user equipment transmits, as part of the respective connection establishment procedure, the further specific coverage time information as part of at least one further radio resource control message to the further specific base station entity.

By means of using, or starting, a timer upon detecting the received radio signals of the specific base station entity as being sufficiently strong, it is advantageously possible that the inventive method is able to be performed in a flexible and efficient manner.
Furthermore, by means of using the S-criterion and/or the cell selection criterion and/or the cell reselection criterion to detect (or to determine) the received radio signals as being sufficiently strong, it is advantageously possible to base this decision on generally used parameters or signal thresholds such that it is, again, advantageously possible to implement the inventive method in a flexible and efficient manner.
It is, thus, possible and recommended that the serving cell S-Criterion (cf. 3GPP TS 36./38.304) defines the point in time, when the user equipment assumes to have "seen" the current serving radio cell (or specific base station entity) for the first time (i.e. decided that the received radio signals of the specific base station entity are sufficiently strong); hence, the time T_{RAN/SAN_Enter} corresponds to the time, when the cell selection criterion (e.g the 3GPP defined "S-criterion") is initially fulfilled.
Furthermore, by means applying the steps of the inventive method not only to the specific base station entity but also to a further specific base station entity (of either the radio access network or of a radio access network of, or associated or assigned to, another mobile communication network), it is advantageously possible that the inventive method is able to be performed and applied in an even more flexible and efficient manner.

According to the present invention, it is furthermore advantageously possible and preferred that, as part of the system information that the user equipment receives from the specific base station entity as part of, or using, the broadcast channel, the user equipment receives a specific indication regarding the transmission of the specific coverage time information and/or wherein, as part of the further system information that the user equipment receives from the further specific base station entity as part of, or using, the further broadcast channel, the user equipment receives a further specific indication regarding the transmission of the further specific coverage time information, wherein especially the specific indication - or the further specific indication - indicates one out of two possible cases, wherein in one of the two cases, the specific indication - or the further specific indication - indicates that the specific coverage time information - or the further specific coverage time information - is to be transmitted by the user equipment and wherein in the other of the two cases, the specific indication - or the further specific indication - indicates that the specific coverage time information - or the further specific coverage time information - is not to be transmitted by the user equipment,
wherein especially - in case that the further specific indication, received by the user equipment, indicates that the further specific coverage time information is not to be transmitted by the user equipment - upon the user equipment initiating to be connected with the further specific base station entity, the user equipment transmits the at least one further radio resource control message to the further specific base station entity without the further specific coverage time information as part of the at least one further radio resource control message.

It is thereby advantageously possible according to the present invention that the specific base station entity (and/or the further specific base station entity) is able to indicate - typically by means of using the respective broadcast (control) channel - whether (or not) the considered user equipment should (i.e., hence, all user equipments shall)
-- transmit the specific coverage time information (upon the considered user equipment initiating to be connected with the specific base station entity) and/or
-- transmit the further specific coverage time information (upon the considered user equipment initiating to be connected with the further specific base station entity).

Furthermore, it is advantageously possible and preferred according to the present invention that the at least one radio resource control message corresponds at least one of the following:
-- radio resource control setup request message,
-- radio resource control setup complete message.

According to the present invention, it is thereby advantageously possible that the inventive method is able to be performed in a flexible and efficient manner.

Furthermore, it is advantageously possible and preferred according to the present invention that the specific coverage time information corresponds to:
-- an absolute indication of the specific point in time, or to
-- a relative indication of the specific point in time, especially relative to the subsequent point in time when the user equipment initiates to be connected with the specific base station entity,
wherein especially the specific base station entity and/or the mobile communication network is able, at least approximately, to determine, based on the knowledge of the specific coverage time information and especially based on a Doppler shift estimation value associated to the user equipment, where the user equipment is located and how long the user equipment will still be located within the radio coverage area of the specific base station entity.

According to the present invention, it is thereby advantageously possible that the inventive method is able to be performed in a flexible and efficient manner.

According to a further preferred embodiment of the present invention, the specific base station entity corresponds to
-- a terrestrial base station entity, especially being part of a terrestrial radio access network of the mobile communication network,
-- a non-terrestrial base station entity, especially being, at least partly, or regarding at least a part of its functionality, especially its antenna functionality, aboard a satellite or a high-altitude platform,
wherein especially, and based on receiving the specific coverage time information indicating the specific point in time, the specific base station entity is configured to infer the likely remaining service time period after the subsequent point in time when the user equipment initiates to be connected with the specific base station entity.

According to the present invention, it is thereby advantageously possible that the inventive method is able to be performed in a flexible and efficient manner.

A second aspect of the invention comprises a user equipment as set forth in claim 8, i.e. a a user equipment for communicating with a specific base station entity of a radio access network of a mobile communication network, wherein the user equipment is configured to receive, from the specific base station entity, system information as part of, or using, a broadcast channel, wherein a specific coverage time information indicating a specific point in time when the user equipment is provided, by the specific base station entity, with sufficiently strong radio coverage, is to be transmitted from the user equipment to the specific base station entity,
wherein in order to determine the specific point in time when the user equipment is provided with sufficiently strong radio coverage by the specific base station entity and in order to be able to transmit the specific coverage time information, the user equipment is configured such that:
-- the user equipment receives radio signals indicative of the broadcast channel of the specific base station entity,
-- at a subsequent point in time and upon the user equipment initiating to be connected with the specific base station entity, the user equipment transmits, as part of the connection procedure, at least one radio resource control message to the specific base station entity, wherein the user equipment transmits the specific coverage time information as part of the at least one radio resource control message and wherein the specific coverage time information indicates the specific point in time when the user equipment detects the received radio signals of the specific base station entity as being sufficiently strong.

A third aspect of the invention comprises a system or mobile communication network as set forth in claim 9, i.e. a a system or mobile communication network for communication of a user equipment with a specific base station entity of a radio access network of the mobile communication network, the system or mobile communication network comprising the user equipment and the specific base station entity, wherein the specific base station entity is configured to transmit system information as part of, or using, a broadcast channel,
wherein a specific coverage time information, indicating a specific point in time when the user equipment is provided, by the specific base station entity, with sufficiently strong radio coverage, is to be transmitted, by the user equipment, to the specific base station entity
wherein in order to determine the specific point in time when the user equipment is provided with sufficiently strong radio coverage by the specific base station entity and in order to be able to transmit the specific coverage time information, the system or mobile communication network being configured such that:
   -- the user equipment receives radio signals indicative of the broadcast channel of the specific base station entity,
   -- at a subsequent point in time and upon the user equipment initiating to be connected with the specific base station entity, the user equipment transmits, as part of the connection procedure, at least one radio resource control message to the specific base station entity, wherein the user equipment transmits the specific coverage time information as part of the at least one radio resource control message and wherein the specific coverage time information indicates the specific point in time when the user equipment detects the received radio signals of the specific base station entity as being sufficiently strong.

A fourth aspect of the invention comprises a program as set forth in claim 10, i.e. a program comprising a computer readable program code, which, when executed on a user equipment, causes the user equipment to perform the inventive method.

A fifth aspect of the invention comprises a computer--readable media as set forth in claim 11, i.e. a computer-readable medium comprising instructions which when executed on a user equipment, cause the user equipmentto perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

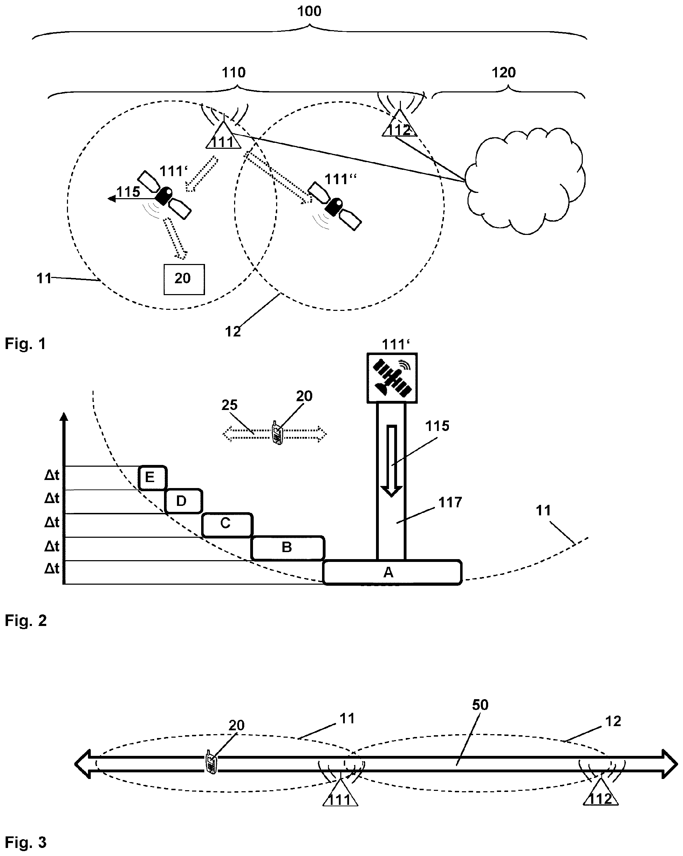

Figure 1 schematically illustrates the situation of a user equipment in a mobile communication network being a non-terrestrial network or at least comprising a part corresponding to a non-terrestrial network, the user equipment being served by a base station entity having at least an antenna entity or functionality being a satellite-based antenna entity or functionality.
Figure 2 schematically illustrates the situation of the user equipment being served by a satellite access network (SAN), i.e. by a base station entity either aboard of a satellite or using a satellite (as an antenna entity or functionality) to provide radio coverage in a certain radio cell; the representation hints at how the position of the user equipment (and, thus, the remaining service period) is able to be inferred by the specific base station entity.
Figure 3 schematically illustrates the situation of the user equipment being served by a terrestrial radio access network, wherein the user equipment moves along a transportation corridor.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a user equipment 20 is schematically shown in a mobile communication network 100. In the example, the mobile communication network 100 comprises an access network 110 and a core network 120. The mobile communication network 100 is preferably a cellular telecommunications network comprising typically a plurality of network cells (or radio cells). According to the present invention, the mobile communication network 100 comprises or uses or is associated or assigned to a radio access network 110, and the radio access network 110 (of the mobile communication network 100) comprises at least one base station entity, but typically a plurality of base station entities. Figure 1 schematically and exemplarily shows a first base station entity 111 and a second base station entity 112.

The mobile communication network 100 (or telecommunications network 100) is or at least comprises a part corresponding to or being a non-terrestrial network. The user equipment 20 is served by the (first) base station entity 111 being part of that non-terrestrial network or that non-terrestrial network part.
The base station entity 111 has or is provided with - in view of serving or providing radio coverage to the user equipment 20 - at least one antenna entity or functionality 111' being either a satellite-based antenna entity or functionality, or an antenna entity or functionality based on a high-altitude platform; Figure 1 primarily shows the alternative of a satellite-based antenna entity or functionality 111'. The antenna entity or functionality 111' - being part of the non-terrestrial network (part) of the mobile communication network 100 - is moving relative to the earth surface along a direction of movement which is schematically indicated by reference sign 115 in Figure 1. The base station entity 111, via or by means of the antenna entity or functionality 111', is thereby able to provide radio coverage to a moving area (on the earth's surface), corresponding to an earth-moving radio cell 11. The second or further base station entity 112 is also schematically shown in Figure 1 as well as a further antenna entity or functionality 111" providing or serving a further radio cell 12.
According to the present invention, the base station entity 111 is provided with at least one antenna entity or functionality 111' (but preferably, the base station entity 111 is provided with more than one antenna entities or functionalities 111', 111"), the at least one antenna entity or functionality 111' (of the base station entity 111) is either a satellite-based antenna entity or functionality (i.e. located onboard a satellite as shown in Figure 1), or an antenna entity or functionality based on a high-altitude platform device (i.e. located onboard such a high altitude platform device, not explicitly shown in Figure 1).

Figure 1 schematically and exemplarily shows a configuration where the mayor parts of the functionality of the base station entity 111 is located separated from the antenna entity or functionality 111', especially at or in an earth or ground station 111; alternatively, the mayor parts of the functionality of the base station entity 111 could also be located at or in another satellite or high-altitude platform device. In such a scenario where the mayor parts of the functionality of the base station entity 111 is located separated from the antenna entity or functionality 111' (and from the further antenna entity or functionality 111"), the antenna entity or functionality 111' (and the further antenna entity or functionality 111"), typically requires some kind of feeder link or feeder connectivity (i.e. to the earth or ground station and/or to another satellite or high altitude platform device); this is schematically indicated, in Figure 1, by means of dotted arrows, directed from the base station entity 111 towards the antenna entities or functionalities 111', 111", respectively.
Alternatively to the configuration shown in Figure 1, it is also possible and preferred according to the present invention that the whole (or mayor parts of the) functionality of the base station entity 111 might be located onboard the satellite or onboard the high altitude platform device. In this case, a backhaul connectivity is typically provided, from the combined satellite-based base station entity 111 comprising the antenna entity or functionality 111', to an earth or ground station and/or to another satellite or high-altitude platform device.

The base station entity 111 is able to serve (i.e. providing communication services to) the considered user equipment 20 by means of or using the at least one antenna entity or functionality 111' during a certain time interval (during which radio coverage is able to be provided, to the considered user equipment 20, by the base station entity 111 and via the antenna entity or functionality 111'). It might be the case, that, subsequent to that (first) time interval, the same base station entity 111 might be able to serve the considered user equipment 20 - by means of using (or via) the second antenna entity or functionality 111" - during a subsequent further (or second) time interval. However, this nevertheless necessitates at least some kind of handover operation to be realized between the first antenna entity or functionality 111' and the second antenna entity or functionality 112'. In the context of the present invention, even though the same (e.g. ground-based) base station entity 111 might be involved (after such a handover between two antenna entities or functionalities 111', 112'), only the serving time interval of one of such satellites or high-altitude platforms (i.e. antenna entities or functionalities 111', 112') is considered; hence, in the context of the present invention, it is the satellites or the high-altitude platforms (even though these would only provide the functionality of antenna entities or functionalities 111', 112' (and not all functionalities of base station entities)) that are addressed when referring to "the user equipment being provided with sufficiently strong radio coverage by the specific base station entity" - meaning "the user equipment being provided with sufficiently strong radio coverage by the specific base station entity, and via a specific (or the specific) antenna entity or functionality 111' (i.e via a (or the) specific satellite 111' or high-altitude platform 111')".

According to the present invention, a user equipment 20 is considered that is served by a specific base station entity 111 of a radio access network 110 of, or associated or assigned to, a mobile communication network 100. As is typically the case also in conventionally known mobile communication networks, the specific base station entity 111 transmits system information as part of, or using, a broadcast channel (especially a broadcast control channel), in the geographical region corresponding to its radio coverage area.

According to the present invention, the considered user equipment 20 is able to transmit (and the specific base station entity 111 is able to receive) a specific coverage time information. The specific coverage time information indicates a specific point in time (T_{RAN/SAN_Enter}) when the user equipment 20 is provided (or starts to be provided), by the specific base station entity 111, with sufficiently strong radio coverage.

According to the present invention, the considered user equipment 20 (i.e. each user equipment, upon entering the respective radio cell or radio coverage area where it is possible to receive the broadcast channel of the specific base station entity 111 by means of a sufficiently strong radiofrequency signal) determines the specific point in time when the considered user equipment 20 is provided with sufficiently strong radio coverage by the specific base station entity 111. Additionally, the considered user equipment 20 transmits the specific coverage time information to the specific base station entity 111 by means of:
-- the user equipment 20 receiving radio signals indicative of the broadcast channel of the specific base station entity 111,
-- at a subsequent point in time and upon the user equipment 20 initiating to be connected with the specific base station entity 111, the user equipment 20 transmits, as part of the connection establishment procedure, at least one radio resource control message to the specific base station entity 111, wherein the user equipment 20 transmits the specific coverage time information as part of the at least one radio resource control message.
The specific coverage time information indicates the specific point in time (T_{RAN/SAN_Enter}) when the user equipment 20 detects the received radio signals of the specific base station entity 111 (especially the broadcast channel of the specific base station entity 111) as being sufficiently strong.

In Figure 2, the situation of the (considered) user equipment 20 being served by a satellite access network (SAN), i.e. by a base station entity 111 either aboard of a satellite 111' or using a satellite (as an antenna entity or functionality 111') to provide radio coverage in a certain radio cell 11 is schematically and exemplarily illustrated. The representation hints at how the position of the user equipment 20 - especially its distance 25 from the central part 117 of the earth moving radio cell - is able to be determined (or approximated) based on the user equipment 20 transmitting the specific coverage time information (and, likewise, how the remaining service period is able to be inferred by the specific base station entity 111):
The user equipment 20 is served by the base station entity 111, having the satellite-based antenna entity or functionality 111' (i.e. the satellite 111') moving relative to the earth surface along a direction of movement 115. At a considered (and represented) point in time, the base station entity 111, via the antenna entity or functionality 111', provides radio coverage to the radio cell 11 as schematically shown in Figure 2, wherein this moving radio cell typically moves together with the antenna entity or functionality (or satellite) 111', i.e. corresponds to an earth-moving radio cell 11. In the direction of movement 115 of the antenna entity or functionality 111', the earth-moving radio cell 11 comprises a central part 117, comprising the center of the radio cell 11 (the radio cell 11 is typically either circular or elliptical, and, in the latter case, the mayor axis thereof are typically parallel to and orthogonal to the direction of movement 115 of the satellite). The user equipment 20 might be more located more or less distanced from the central part 117 of the radio cell 11 (towards either sides, left or right of the central part 117). Along the lower left-hand border of the radio cell 11, a couple of lateral ranges - indicated by means of reference signs "A" to "E" - are represented: The first lateral range "A" corresponds to the central part 117 and to the lateral area (on both sides of the central part 117) adjacent to the central part 117; each one of the further lateral ranges "B" to "E" corresponds to an increasingly larger distance 25 from the central part 117 of the radio cell 11. As it is indicated on the left-hand side of Figure 2, for each subsequent lateral range (i.e. "B" compared to "A", "C" compared to "B", etc.), an additional time difference Δt is applicable in the respective lateral range. This means: In case the user equipment 20 is located in the first lateral range "A", its specific coverage time information will indicate a specific point in time (T_{RAN/SAN_Enter}) that is one additional time difference Δt earlier than compared to the case that the user equipment 20 is located in the second lateral range "B" - due to the fact that a user equipment 20, being located in lateral range "B" instead of in lateral range "A", receives (due to the circular or elliptical form of the radio cell), or 'sees' the satellite or its radio cell shortly later - (and, of course, two additional time differences 2*Δt earlier than compared to the case that the user equipment 20 is located in the third lateral range "C", and so on).
Stated otherwise: The specific point in time (T_{RAN/SAN_Enter}) that the user equipment 20 indicates to the specific base station entity 111 - by means of transmitting the specific coverage time information as the time that the user equipment 20 is provided (or starts to be provided), by the specific base station entity 111, with sufficiently strong radio coverage - also indicates the lateral range of the user equipment 20 (but it does not indicate on which side (left or right side) of the central part 117 of the radio cell 11 it is located). Hence, according to the present invention, without explicitly communicating the exact location of the user equipment 20, it is possible to provide the specific base station entity 111 with an approximate location of the user equipment 20, and, thus, with sufficient information to be able to infer the remaining service time period after the subsequent point in time when the user equipment 20 initiates to be connected with the specific base station entity 111.

Figure 3 schematically illustrates the situation of the user equipment 20 being served by a terrestrial radio access network of a (cellular) mobile communication network, wherein the user equipment 20 moves along a transportation corridor 50, e.g. a railway line or a motorway. For the sake of simplicity, neither the radio access network nor the mobile communication network are represented in Figure 3.
Exemplarily, two base station entities - i.e. a first base station entity 111 and a second base station entity 112 - (of, typically, a plurality of base station entities of the radio access network/mobile communication network) are schematically and exemplarily shown. Each one of these base station entities 111, 112 cover a part of the extension of the transportation corridor 50: the first base station entity 111 by means of a first radio cell 11 (covering a first part of the transportation corridor 50, rather on the left hand side of Figure 3), and the second base station entity 112 by means of a second radio cell 12 (covering a second part of the transportation corridor 50, rather on the right hand side of Figure 3). Figure 3 schematically shows the situation when the user equipment 20 is served by the (first) base station entity 111. If, for example, the user equipment 20 travels (using the transportation corridor 50) from left to right in Figure 3, there is a specific point in time (T_{RAN/SAN_Enter}) when the user equipment 20 receives the radiofrequency signals of the first base station entity 111 (especially signals carrying system information using a broadcast channel of the first base station entity 111) as being sufficiently strong, i.e. especially exceeding the S-criterion and/or the cell selection criterion and/or the cell reselection criterion. According to the present invention, this point in time is 'noted', or tracked, by the user equipment 20 - especially by means of starting a timer - and, in case of a connection request or a connection establishment procedure later on, transmitted to the first base station entity 111 as part of the specific coverage time information of at least one radio resource control message. It is then possible for the first base station entity 111 to estimate at which point in time the user equipment 20 will probably have reached the end of the radio coverage area of the radio cell (T_{RAN/SAN-Exit}), i.e. it is able to estimate the remaining service time period (at which the user equipment 20 will need to be served by the second base station entity 112 as it enters the second radio cell 12) after the subsequent point in time when the user equipment 20 initiates to be connected with the specific base station entity 111.
Of course, such an estimation of the remaining service time period assumes that a 'normal operation' of the transportation corridor 50 applies, e.g. trains typically travel with a certain velocity at the location where the first base station entity 111 provides radio coverage along the transportation corridor 50, and, if this is verified, the estimated remaining service time period will - at least roughly - correspond to the real service time period (measured or able to be established after the user equipment 20 has left the first radio cell 11). Of course, if these assumptions (of a normal operation of the transportation corridor 50 and/or of the user equipment 20 actually using the transportation corridor 50) are not verified, the estimation of the remaining service time period might considerably differ from the actual remaining service time period (within the first radio cell 11 of the first base station entity 111).
According to the present invention, this might be detected (and/or the thus computed estimation modulated) within or by means of the first base station entity 111 (i.e. within or by all the base station entities along the transportation corridor 50, as, here, the first base station entity 111 only serves as the example used) using a Doppler shift estimation value related to the respective user equipment 20: Such a Doppler shift estimation value might be an indicator of the actual velocity of the user equipment 20, and in case such Doppler shift estimation value largely differs from what would be expected in case the above mentioned assumptions hold, such estimation of the remaining service time period might either not be computed at all (within the first base station entity 111) or not be used or applied.
Thus, it is - also in this case of a terrestrial radio access network - advantageously possible, according to the present invention, that - based on being informed (from the considered user equipment 20, and by means of the specific coverage time information) of the T_{RAN/SAN_access} point in time - the specific base station entity (i.e. the first base station entity 111) is able to calculate the exit time T_{RAN/SAN_Exit} of the considered user equipment 20 without receiving explicit detailed position information of the precise position of this user equipment 20. Hence, the considered user equipment 20 does not reveal its own precise location for privacy reasons, and, thus, respects the corresponding privacy preservation rules, and the specific first base station entity 111 is nevertheless able to compute a good estimate regarding the remaining service time period.

Especially regarding terrestrial base station entities, and especially providing radio coverage in areas without such transportation or other corridors, the proportion of cases (of user equipments) where a meaningful estimation of the remaining service time period (regarding a typical user equipment being served by that base station entity) is possible or at least roughly accurate might be comparatively low. Especially in such a situation or scenario, it might be advantageous not to impose on the user equipment - i.e. on each and every user equipment receiving the system information or broadcast channel of that base station entity and being, potentially, served by that base station entity - to note or track the respective T_{RAN/SAN_access} point in time. Hence, it is preferred, according to the present invention that the user equipment 20 receives, from each base station entity potentially separately and independently, a corresponding indication regarding the transmission of the specific coverage time information. Hence, regarding the specific base station entity (e.g. the first base station entity 111) the user equipment 20 receives:
-- a specific indication regarding the transmission of the specific coverage time information (as part of the system information that the user equipment receives from the specific base station entity 111 as part of, or using, the broadcast channel), and/or
-- a further specific indication regarding the transmission of the further specific coverage time information (as part of the further system information that the user equipment receives from the further specific base station entity as part of, or using, the further broadcast channel).
The specific indication indicates one out of two possible cases, and these two possible cases comprise the possible case that the specific coverage time information is to be transmitted by the user equipment, and the possible case that the specific coverage time information is not to be transmitted by the user equipment; likewise, the further specific indication indicates one out of two possible cases, and these two possible cases comprise the possible case that the further specific coverage time information is to be transmitted by the user equipment, and the possible case that the further specific coverage time information is not to be transmitted by the user equipment. In case that the further specific indication - received by the user equipment 20 from the further specific base station entity - indicates that the further specific coverage time information is not to be transmitted by the user equipment 20 (upon the user equipment 20 initiating to be connected with the further specific base station entity), the user equipment 20 transmits the at least one further radio resource control message to the further specific base station entity without the further specific coverage time information as part of the at least one further radio resource control message.

Especially according to the present invention, the respective point in time T_{RAN/SAN_Enter} is not only 'noted', or tracked, by the user equipment 20 regarding the specific (serving) base station entity 111 but also for other base station entities (i.e. the respective point in time (i.e. the further specific coverage time information) when the user equipment 20 detects the received radio signals of the other base station entity as being sufficiently strong), hence regarding a further specific base station entity (of either the (same) radio access network 110 (i.e. of the (same) mobile communication network 100), or of a (different) radio access network of, or associated or assigned to, another mobile communication network - not represented in the Figures). Hence, in case that the user equipment 20 initiates a connection establishment procedure with (or towards) the other base station entity, the user equipment 20 is able to transmit the further specific coverage time information.
It is possible and preferred, according to the present invention, to extend this mechanism to a certain number of other base station entities, e.g. to one, two, three, four, five, six or seven further base station entities.

Hence, according to the present invention, it is especially preferred that the user equipment 20 starts a timer at T_{RAN/SAN_Enter} when entering the suitable serving radio cell (in idle mode once the cell selection criterion S is initially fulfilled). The user equipment 20 transmits (or signals) T_{RAN/SAN_Enter} (alternatively T_{RAN/SAN_Access} - T_{RAN/SAN_Enter}) during its access procedure (e.g. msg3 or msg5) to the respective (serving) base station entity (e.g. base station entity 111).
Based thereon the respective (serving) base station entity 111 can calculate the exit time T_{RAN/SAN_Exit} of the user equipment 20 without knowledge of the precise position of the user equipment 20, and the user equipment 20 does not (need to) reveal its own precise location, thus respecting privacy concerns. Hence without the timing information (T_{RAN/SAN_Enter}), the serving base station entity 111 would not have any valid information of the relative position of the user equipment 20 inside the respective radio cell. Especially regarding non-terrestrial network radio cells, to estimate the user equipment position, the SAN is provided with coverage time information by the user equipment 20. Based on this knowledge in the SAN, and, as well, about the spot beam geometric shape, the SAN can use this information to calculate the exit time T_{RAN/SAN_Exit}. The SAN still does not know if the user equipment 20 is left or right of the trajectory of the satellite which hides the real user equipment-position to the SAN.
Application on the information of the remaining time of the user equipment 20 in the spot beam of the SAN: The SAN can use the elapsed time in the radio cell to calculate the remaining time until (expected) T_{RAN/SAN_Exit} and allocate the communication resources for the user equipment 20 based on the remaining time - considering the demand to send or receive data from multiple user equipments, all with different periods of time remaining in the cell.

According to the present invention (and irrespective of the serving specific base station entity is a terrestrial base station entity or a non-terrestrial base station entity), the knowledge of the remaining service time period mayadvantageously be used, e.g., to avoid that a user equipment is scheduled for data transmission during the time that the user equipment might experience or create inter-cell/inter-beam interference, e.g. short before the beam will not be able to serve the user equipment anymore.

In the following, example changes to 3GPP TS 38.331, Chapter 5.3.3.4 "Reception of the RRCSetup by the UE" are provided (i.e. when the user equipment goes from idle mode (RRC_IDLE) to connected mode (RRC_CONNECTED):

```
 (...)
     2> if the RRCSetup is received in response to an RRCResumeRequest,
     RRCResumeRequest1 or RRCSetupRequest:
       3> if speedStateReselectionPars is configured in the SIB2:
          4> include the mobilityState in the RRCSetupComplete message and
          set it to the mobility state (as specified in
 TS 38.304 [20]) of the UE just prior to entering
          RRC_CONNECTED state;
     2> if the RRCSetup is received from an SAN
       3> include the tSANEnter in the RRCSetupComplete message;
  1> submit the RRCSetupComplete message to lower layers for transmission,
  upon which the procedure ends.
  (...)
```

RRCSetupComplete: The RRCSetupComplete message is used to confirm the successful completion of an RRC connection establishment.
Signalling radio bearer: SRB1
RLC-SAP: AM
Logical channel: DCCH
Direction: UE to Network

### RRCSetupComplete message:

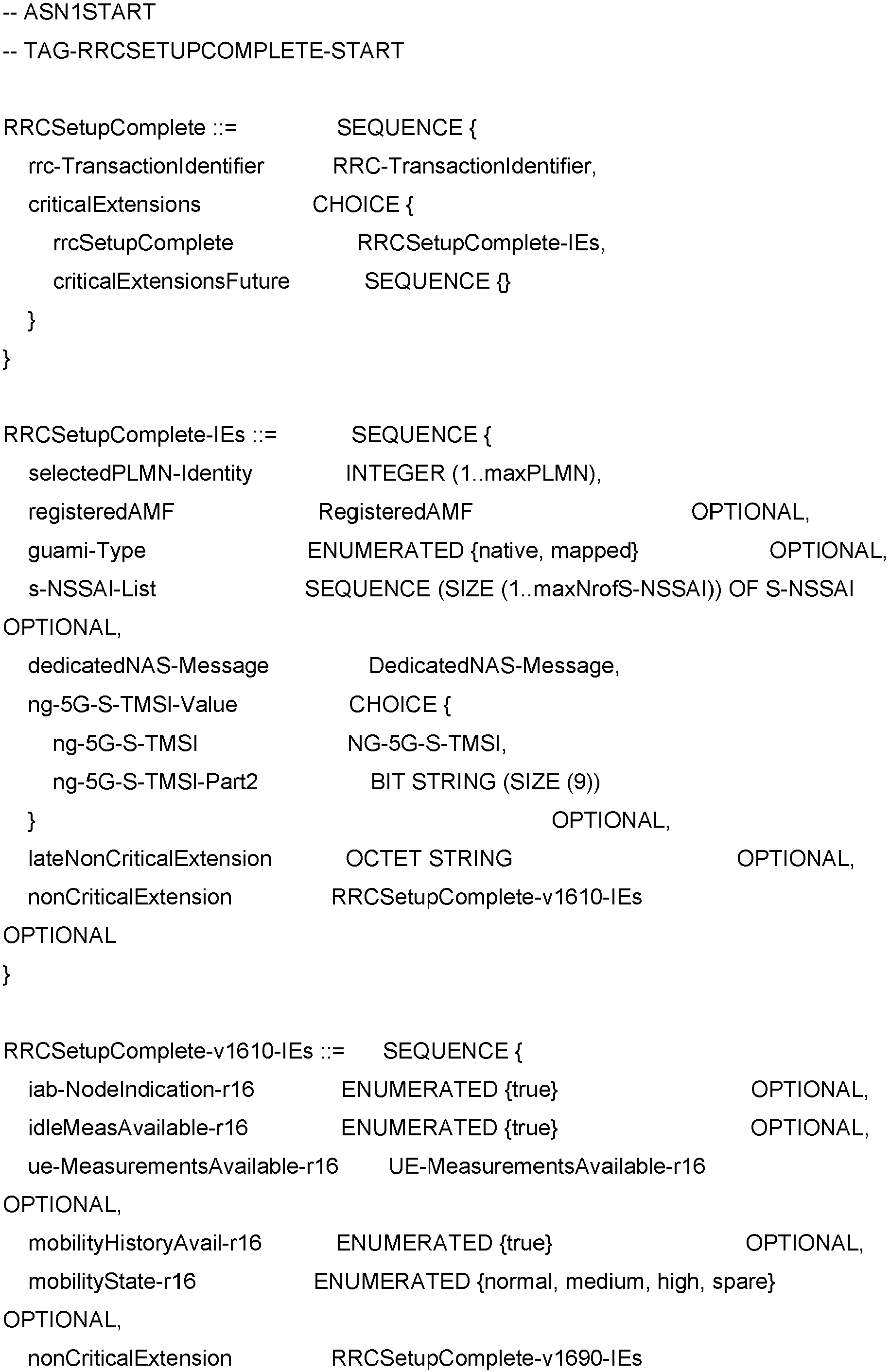

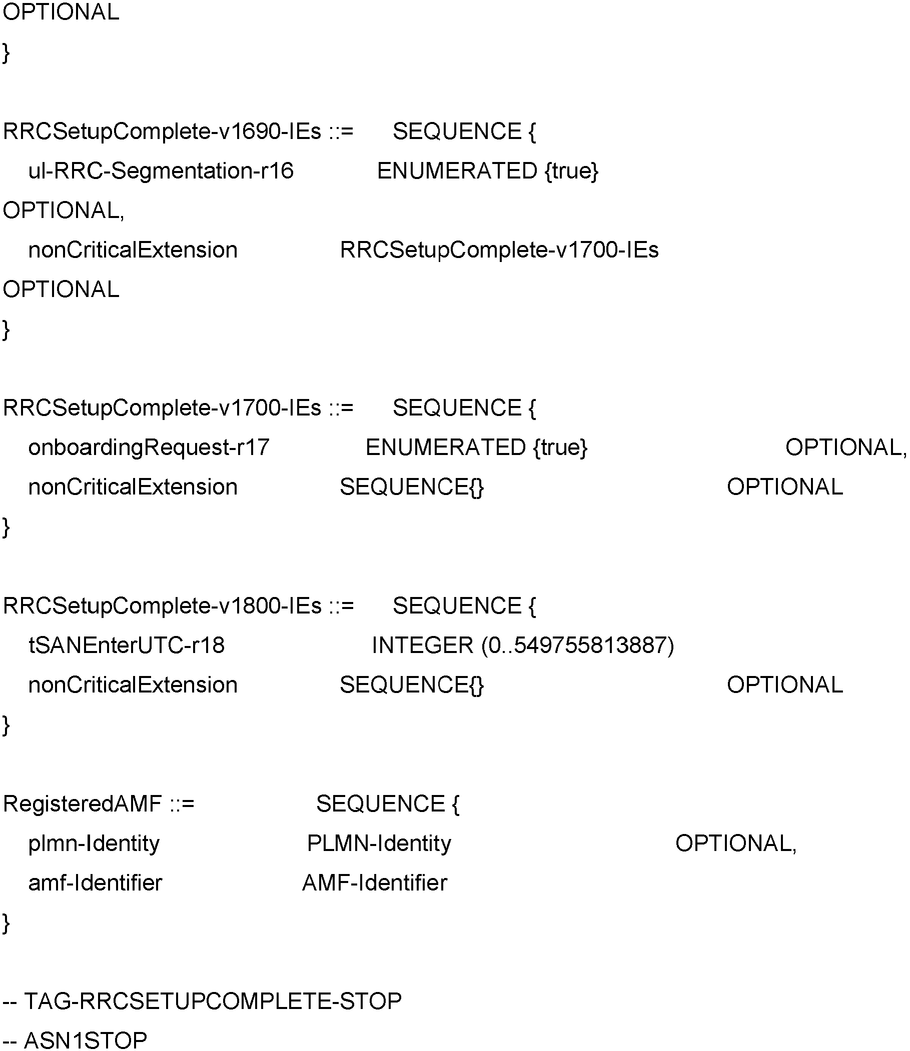

RRCSetupComplete-lEs field descriptions:
guami-Type
   This field is used to indicate whether the GUAMI included is native (derived from native 5G-GUTI) or mapped (from EPS, derived from EPS GUTI) as specified in TS 24.501 [23].
iab-Nodelndication
   This field is used to indicate that the connection is being established by an IAB-node as specified in TS 38.300 [2].
idleMeasAvailable
   Indication that the UE has idle/inactive measurement report available.
mobilityState
   This field indicates the UE mobility state (as defined in TS 38.304 [20], clause 5.2.4.3) just prior to UE going into RRC_CONNECTED state. The UE indicates the value of medium and high when being in Medium-mobility and High-mobility states respectively. Otherwise the UE indicates the value normal.
ng-5G-S-TMSI-Part2
   The leftmost 9 bits of 5G-S-TMSI.
onboardingRequest
   This field indicates that the connection is being established for UE onboarding in the selected onboarding SNPN, see TS 23.501 [32].
registeredAMF
   This field is used to transfer the GUAMI of the AMF where the UE is registered, as provided by upper layers, see TS 23.003 [21].
selectedPLMN-Identity
   Index of the PLMN or SNPN selected by the UE from the plmn-ldentitylnfoList or npn-IdentitylnfoList fields included in SIB1.
tSANEnterUTC
   Coordinated Universal Time corresponding to the SFN boundary at or immediately after the ending boundary of the SI-window in which SIB19 is transmitted and NTN cell was suitable as defined in 3GPP TS 38.304. The field counts the number of UTC seconds in 10 ms units since 00:00:00 on Gregorian calendar date 1 January, 1900 (midnight between Sunday, December 31, 1899 and Monday, January 1, 1900).
ul-RRC-Segmentation
   This field indicates the UE supports uplink RRC segmentation of UECapabilitylnformation.

## Claims

1. Method for communication of a user equipment (20) with a specific base station entity (111) of a radio access network (110) of, or associated or assigned to, a mobile communication network (100), wherein the user equipment (20) receives, from the base station entity (111), system information as part of, or using, a broadcast channel,
wherein a specific coverage time information indicating a specific point in time when the user equipment (20) is provided, by the specific base station entity (111), with sufficiently strong radio coverage, is to be transmitted, by the user equipment (20), to the specific base station entity (111),
wherein in order to determine the specific point in time when the user equipment (20) is provided with sufficiently strong radio coverage by the specific base station entity (111) and in order to be able to transmit the specific coverage time information, the method being executed by the user equipment (20) comprises the following steps:
-- in a first step, the user equipment (20) receives radio signals indicative of the broadcast channel of the specific base station entity (111),
-- in a second step, at a subsequent point in time and upon the user equipment (20) initiating to be connected with the specific base station entity (111), the user equipment (20) transmits, as part of the connection establishment procedure, at least one radio resource control message to the specific base station entity (111),
wherein the user equipment (20) transmits the specific coverage time information as part of the at least one radio resource control message and wherein the specific coverage time information indicates the specific point in time when the user equipment (20) detects the received radio signals of the specific base station entity (111) as being sufficiently strong.

2. Method according to claim 1, wherein the user equipment (20) is, at least prior to initiating to be connected with the specific base station entity (111), in idle mode.

3. Method according to one of the preceding claims, wherein the user equipment (20) starts a timer upon detecting the received radio signals of the specific base station entity (111) as being sufficiently strong,
wherein especially the received radio signals are regarded as being sufficiently strong if at least one out of the following criteria are met:
-- the received radio signals of the specific base station entity (111) correspond to, or exceed, the S-criterion ,
-- the received radio signals of the specific base station entity (111) correspond to, or exceed, the cell selection criterion ,
-- the received radio signals of the specific base station entity (111) correspond to, or exceed, the cell reselection criterion regarding the specific base station entity (111),
wherein especially, the user equipment receives from a further specific base station entity of either the radio access network (110) or of a radio access network of, or associated or assigned to, another mobile communication network further system information as part of, or using, a further broadcast channel, wherein a further specific coverage time information indicating a further specific point in time when the user equipment (20) is provided, by the further specific base station entity, with sufficiently strong radio coverage, is to be transmitted, by the user equipment (20), to the further specific base station entity, wherein the user equipment (20) starts a further timer upon detecting the received radio signals of the further specific base station entity as being sufficiently strong, and, if applicable, upon the user equipment (20) initiating to be connected with the further specific base station entity, the user equipment (20) transmits, as part of the respective connection establishment procedure, the further specific coverage time information as part of at least one further radio resource control message to the further specific base station entity.

4. Method according to one of the preceding claims, wherein, as part of the system information that the user equipment (20) receives from the specific base station entity (111) as part of, or using, the broadcast channel, the user equipment (20) receives a specific indication regarding the transmission of the specific coverage time information and/or wherein, as part of the further system information that the user equipment (20) receives from the further specific base station entity as part of, or using, the further broadcast channel, the user equipment (20) receives a further specific indication regarding the transmission of the further specific coverage time information,
wherein especially the specific indication - or the further specific indication - indicates one out of two possible cases, wherein in one of the two cases, the specific indication - or the further specific indication - indicates that the specific coverage time information - or the further specific coverage time information - is to be transmitted by the user equipment (20) and wherein in the other of the two cases, the specific indication - or the further specific indication - indicates that the specific coverage time information - or the further specific coverage time information - is not to be transmitted by the user equipment (20),
wherein especially - in case that the further specific indication, received by the user equipment (20), indicates that the further specific coverage time information is not to be transmitted by the user equipment (20) - upon the user equipment (20) initiating to be connected with the further specific base station entity, the user equipment (20) transmits the at least one further radio resource control message to the further specific base station entity without the further specific coverage time information as part of the at least one further radio resource control message.

5. Method according to one of the preceding claims, wherein the at least one radio resource control message corresponds at least one of the following:
-- radio resource control setup request message,
-- radio resource control setup complete message.

6. Method according to one of the preceding claims, wherein the specific coverage time information corresponds to:
-- an absolute indication of the specific point in time, or to
-- a relative indication of the specific point in time, especially relative to the subsequent point in time when the user equipment (20) initiates to be connected with the specific base station entity (111),
wherein especially the specific base station entity (111) and/or the mobile communication network (100) is able, at least approximately, to determine, based on the knowledge of the specific coverage time information and especially based on a Doppler shift estimation value associated to the user equipment (20), where the user equipment (20) is located and how long the user equipment (20) will still be located within the radio coverage area of the specific base station entity (111).

7. Method according to one of the preceding claims, wherein the specific base station entity (111) corresponds to
-- a terrestrial base station entity, especially being part of a terrestrial radio access network (110) of the mobile communication network (100),
-- a non-terrestrial base station entity, especially being, at least partly, or regarding at least a part of its functionality, especially its antenna functionality, aboard a satellite or a high-altitude platform,
wherein especially, and based on receiving the specific coverage time information indicating the specific point in time, the specific base station entity (111) is configured to infer the likely remaining service time period after the subsequent point in time when the user equipment (20) initiates to be connected with the specific base station entity (111).

8. User equipment (20) for communicating with a specific base station entity (111) of a radio access network (110) of a mobile communication network (100), wherein the user equipment (20) is configured to receive, from the specific base station entity (111), system information as part of, or using, a broadcast channel,
wherein a specific coverage time information indicating a specific point in time when the user equipment (20) is provided, by the specific base station entity (111), with sufficiently strong radio coverage, is to be transmitted from the user equipment (20) to the specific base station entity (111),
wherein in order to determine the specific point in time when the user equipment (20) is provided with sufficiently strong radio coverage by the specific base station entity (111) and in order to be able to transmit the specific coverage time information, the user equipment (20) is configured such that:
-- the user equipment (20) receives radio signals indicative of the broadcast channel of the specific base station entity (111),
-- at a subsequent point in time and upon the user equipment (20) initiating to be connected with the specific base station entity (111), the user equipment (20) transmits, as part of the connection procedure, at least one radio resource control message to the specific base station entity (111), wherein the user equipment (20) transmits the specific coverage time information as part of the at least one radio resource control message and wherein the specific coverage time information indicates the specific point in time when the user equipment (20) detects the received radio signals of the specific base station entity (111) as being sufficiently strong.

9. System or mobile communication network (100) for communication of a user equipment (20) with a specific base station entity (111) of a radio access network (110) of the mobile communication network (100), the system or mobile communication network comprising the user equipment(20) and the specific base station entity(111), wherein the specific base station entity (111) is configured to transmit system information as part of, or using, a broadcast channel,
wherein a specific coverage time information, indicating a specific point in time when the user equipment (20) is provided, by the specific base station entity (111), with sufficiently strong radio coverage, is to be transmitted, by the user equipment (20), to the specific base station entity (111) wherein in order to determine the specific point in time when the user equipment (20) is provided with sufficiently strong radio coverage by the specific base station entity (111) and in order to be able to transmit the specific coverage time information, the system or mobile communication network being configured such that:
-- the user equipment (20) receives radio signals indicative of the broadcast channel of the specific base station entity (111),
-- at a subsequent point in time and upon the user equipment (20) initiating to be connected with the specific base station entity (111), the user equipment (20) transmits, as part of the connection procedure, at least one radio resource control message to the specific base station entity (111), wherein the user equipment (20) transmits the specific coverage time information as part of the at least one radio resource control message and wherein the specific coverage time information indicates the specific point in time when the user equipment (20) detects the received radio signals of the specific base station entity (111) as being sufficiently strong.

10. Program comprising a computer readable program code, which, when executed on a user equipment (20), causes the user equipment (20) to perform a method according one of claims 1 to 7.

11. Computer-readable medium comprising instructions which when executed on a user equipment (20), cause the user equipment (20) to perform a method according one of claims 1 to 7.

## Patentansprüche

1. Verfahren zur Kommunikation eines Benutzergeräts (20) mit einer bestimmten Basisstationseinheit (111) eines Funkzugangsnetzes (110) eines Mobilfunknetzes (100) oder einem diesem zugeordneten oder zugewiesenen Mobilfunknetz (100),
wobei das Benutzergerät (20) von der Basisstationseinheit (111) Systeminformationen als Teil eines Rundfunkkanals oder unter Verwendung eines Rundfunkkanals empfängt,
wobei eine bestimmte Abdeckungszeitinformation, die einen bestimmten Zeitpunkt angibt, zu dem das Benutzergerät (20) von der bestimmten Basisstationseinheit (111) mit ausreichend starker Funkabdeckung versorgt wird, von dem Benutzergerät (20) an die bestimmte Basisstationseinheit (111) zu übertragen ist,
wobei zur Bestimmung des bestimmten Zeitpunkts, zu dem das Benutzergerät (20) von der bestimmten Basisstationseinheit (111) mit ausreichend starker Funkabdeckung versorgt wird, und um die bestimmte Abdeckungszeitinformation übertragen zu können, das von dem Benutzergerät (20) ausgeführte Verfahren die folgenden Schritte umfasst:
-- in einem ersten Schritt empfängt das Benutzergerät (20) Funksignale, die den Rundfunkkanal der bestimmten Basisstationseinheit (111) anzeigen,
**--** in einem zweiten Schritt überträgt das Benutzergerät (20) zu einem nachfolgenden Zeitpunkt und bei Initiierung einer Verbindung des Benutzergeräts (20) mit der bestimmten Basisstationseinheit (111) als Teil des Verbindungsaufbauverfahrens mindestens eine Funkressourcensteuerungsnachricht an die bestimmte Basisstationseinheit (111), wobei das Benutzergerät (20) die bestimmte Abdeckungszeitinformation als Teil der mindestens einen Funkressourcensteuerungsnachricht überträgt und wobei die bestimmte Abdeckungszeitinformation den bestimmten Zeitpunkt angibt, zu dem das Benutzergerät (20) die empfangenen Funksignale der bestimmten Basisstationseinheit (111) als ausreichend stark erkennt.

2. Verfahren nach Anspruch 1, wobei sich das Benutzergerät (20) zumindest vor der Initiierung der Verbindung mit der bestimmten Basisstationseinheit (111) im Ruhemodus befindet.

3. Verfahren nach einem der vorhergehenden Ansprüche, wobei das Benutzergerät (20) einen Zeitgeber startet, wenn es die empfangenen Funksignale der bestimmten Basisstationseinheit (111) als ausreichend stark erkennt,
wobei insbesondere die empfangenen Funksignale als ausreichend stark angesehen werden, wenn mindestens eines der folgenden Kriterien erfüllt ist:
-- die empfangenen Funksignale der bestimmten Basisstationseinheit (111) entsprechen dem S-Kriterium oder überschreiten dieses,
**--** die empfangenen Funksignale der bestimmten Basisstationseinheit (111) entsprechen dem Zellauswahlkriterium oder überschreiten dieses,
**--** die empfangenen Funksignale der bestimmten Basisstationseinheit (111) entsprechen dem Zellneuwählkriterium bezüglich der bestimmten Basisstationseinheit (111) oder überschreiten dieses,
wobei insbesondere das Benutzergerät von einer weiteren bestimmten Basisstationseinheit entweder des Funkzugangsnetzes (110) oder eines Funkzugangsnetzes eines anderen Mobilfunknetzes oder eines diesem zugeordneten oder zugewiesenen Mobilfunknetzes weitere Systeminformationen als Teil eines weiteren Rundfunkkanals oder unter Verwendung eines weiteren Rundfunkkanals empfängt, wobei eine weitere bestimmte Abdeckungszeitinformation, die einen weiteren bestimmten Zeitpunkt angibt, zu dem das Benutzergerät (20) von der weiteren bestimmten Basisstationseinheit mit ausreichend starker Funkabdeckung versorgt wird, von dem Benutzergerät (20) an die weitere bestimmte Basisstationseinheit zu übertragen ist, wobei das Benutzergerät (20) einen weiteren Zeitgeber startet, wenn es die empfangenen Funksignale der weiteren bestimmten Basisstationseinheit als ausreichend stark erkennt, und gegebenenfalls bei Initiierung einer Verbindung des Benutzergeräts (20) mit der weiteren bestimmten Basisstationseinheit das Benutzergerät (20) als Teil des jeweiligen Verbindungsaufbauverfahrens die weitere bestimmte Abdeckungszeitinformation als Teil mindestens einer weiteren Funkressourcensteuerungsnachricht an die weitere bestimmte Basisstationseinheit überträgt.

4. Verfahren nach einem der vorhergehenden Ansprüche, wobei das Benutzergerät (20) als Teil der Systeminformationen, die das Benutzergerät (20) von der bestimmten Basisstationseinheit (111) als Teil des Rundfunkkanals oder unter Verwendung des Rundfunkkanals empfängt, eine bestimmte Anzeige bezüglich der Übertragung der bestimmten Abdeckungszeitinformation empfängt und/oder wobei das Benutzergerät (20) als Teil der weiteren Systeminformationen, die das Benutzergerät (20) von der weiteren bestimmten Basisstationseinheit als Teil des weiteren Rundfunkkanals oder unter Verwendung des weiteren Rundfunkkanals empfängt, eine weitere bestimmte Anzeige bezüglich der Übertragung der weiteren bestimmten Abdeckungszeitinformation empfängt,
wobei insbesondere die bestimmte Anzeige **--** oder die weitere bestimmte Anzeigeeinen von zwei möglichen Fällen anzeigt, wobei in einem der beiden Fälle die bestimmte Anzeige **--** oder die weitere bestimmte Anzeige **--** anzeigt, dass die bestimmte Abdeckungszeitinformation **--** oder die weitere bestimmte Abdeckungszeitinformation **--** von dem Benutzergerät (20) zu übertragen ist, und
wobei in dem anderen der beiden Fälle die bestimmte Anzeige **--** oder die weitere bestimmte Anzeige **--** anzeigt, dass die bestimmte Abdeckungszeitinformation **--** oder die weitere bestimmte Abdeckungszeitinformation **--** nicht von dem Benutzergerät (20) zu übertragen ist,
wobei insbesondere **--** in dem Fall, dass die von dem Benutzergerät (20) empfangene weitere bestimmte Anzeige anzeigt, dass die weitere bestimmte Abdeckungszeitinformation nicht von dem Benutzergerät (20) zu übertragen ist **--** bei Initiierung einer Verbindung des Benutzergeräts (20) mit der weiteren bestimmten Basisstationseinheit das Benutzergerät (20) die mindestens eine weitere Funkressourcensteuerungsnachricht an die weitere bestimmte Basisstationseinheit ohne die weitere bestimmte Abdeckungszeitinformation als Teil der mindestens einen weiteren Funkressourcensteuerungsnachricht überträgt.

5. Verfahren nach einem der vorhergehenden Ansprüche, wobei die mindestens eine Funkressourcensteuerungsnachricht mindestens einer der folgenden entspricht:
-- Funkressourcensteuerungs-Aufbauanforderungsnachricht,
-- Funkressourcensteuerungs-Aufbauabschlussnachricht.

6. Verfahren nach einem der vorhergehenden Ansprüche, wobei die bestimmte Abdeckungszeitinformation Folgendem entspricht:
-- einer absoluten Angabe des bestimmten Zeitpunkts, oder
-- einer relativen Angabe des bestimmten Zeitpunkts, insbesondere relativ zu dem nachfolgenden Zeitpunkt, zu dem das Benutzergerät (20) die Verbindung mit der bestimmten Basisstationseinheit (111) initiiert,
wobei insbesondere die bestimmte Basisstationseinheit (111) und/oder das Mobilfunknetz (100) in der Lage ist, zumindest näherungsweise auf der Grundlage der Kenntnis der bestimmten Abdeckungszeitinformation und insbesondere auf der Grundlage eines dem Benutzergerät (20) zugeordneten Dopplerverschiebungs-Schätzwerts zu bestimmen, wo sich das Benutzergerät (20) befindet und wie lange sich das Benutzergerät (20) noch innerhalb des Funkabdeckungsbereichs der bestimmten Basisstationseinheit (111) befinden wird.

7. Verfahren nach einem der vorhergehenden Ansprüche, wobei die bestimmte Basisstationseinheit (111) Folgendem entspricht:
-- einer terrestrischen Basisstationseinheit, insbesondere als Teil eines terrestrischen Funkzugangsnetzes (110) des Mobilfunknetzes (100),
-- einer nicht-terrestrischen Basisstationseinheit, insbesondere die sich, zumindest teilweise oder hinsichtlich zumindest eines Teils ihrer Funktionalität, insbesondere ihrer Antennenfunktionalität, an Bord eines Satelliten oder einer Höhenplattform befindet,
wobei insbesondere auf der Grundlage des Empfangs der bestimmten Abdeckungszeitinformation, die den bestimmten Zeitpunkt angibt, die bestimmte Basisstationseinheit (111) konfiguriert ist, den wahrscheinlich verbleibenden Dienstzeitraum nach dem nachfolgenden Zeitpunkt abzuleiten, zu dem das Benutzergerät (20) die Verbindung mit der bestimmten Basisstationseinheit (111) initiiert.

8. Benutzergerät (20) zur Kommunikation mit einer bestimmten Basisstationseinheit (111) eines Funkzugangsnetzes (110) eines Mobilfunknetzes (100), wobei das Benutzergerät (20) konfiguriert ist, von der bestimmten Basisstationseinheit (111) Systeminformationen als Teil eines Rundfunkkanals oder unter Verwendung eines Rundfunkkanals zu empfangen,
wobei eine bestimmte Abdeckungszeitinformation, die einen bestimmten Zeitpunkt angibt, zu dem das Benutzergerät (20) von der bestimmten Basisstationseinheit (111) mit ausreichend starker Funkabdeckung versorgt wird, von dem Benutzergerät (20) an die bestimmte Basisstationseinheit (111) zu übertragen ist,
wobei zur Bestimmung des bestimmten Zeitpunkts, zu dem das Benutzergerät (20) von der bestimmten Basisstationseinheit (111) mit ausreichend starker Funkabdeckung versorgt wird, und um die bestimmte Abdeckungszeitinformation übertragen zu können, das Benutzergerät (20) so konfiguriert ist, dass:
-- das Benutzergerät (20) Funksignale empfängt, die den Rundfunkkanal der bestimmten Basisstationseinheit (111) anzeigen,
-- zu einem nachfolgenden Zeitpunkt und bei Initiierung einer Verbindung des Benutzergeräts (20) mit der bestimmten Basisstationseinheit (111) das Benutzergerät (20) als Teil des Verbindungsverfahrens mindestens eine Funkressourcensteuerungsnachricht an die bestimmte Basisstationseinheit (111) überträgt, wobei das Benutzergerät (20) die bestimmte Abdeckungszeitinformation als Teil der mindestens einen Funkressourcensteuerungsnachricht überträgt und wobei die bestimmte Abdeckungszeitinformation den bestimmten Zeitpunkt angibt, zu dem das Benutzergerät (20) die empfangenen Funksignale der bestimmten Basisstationseinheit (111) als ausreichend stark erkennt.

9. System oder Mobilfunknetz (100) zur Kommunikation eines Benutzergeräts (20) mit einer bestimmten Basisstationseinheit (111) eines Funkzugangsnetzes (110) des Mobilfunknetzes (100), wobei das System oder Mobilfunknetz das Benutzergerät (20) und die bestimmte Basisstationseinheit (111) umfasst, wobei die bestimmte Basisstationseinheit (111) konfiguriert ist, Systeminformationen als Teil eines Rundfunkkanals oder unter Verwendung eines Rundfunkkanals zu übertragen,
wobei eine bestimmte Abdeckungszeitinformation, die einen bestimmten Zeitpunkt angibt, zu dem das Benutzergerät (20) von der bestimmten Basisstationseinheit (111) mit ausreichend starker Funkabdeckung versorgt wird, von dem Benutzergerät (20) an die bestimmte Basisstationseinheit (111) zu übertragen ist,
wobei zur Bestimmung des bestimmten Zeitpunkts, zu dem das Benutzergerät (20) von der bestimmten Basisstationseinheit (111) mit ausreichend starker Funkabdeckung versorgt wird, und um die bestimmte Abdeckungszeitinformation übertragen zu können, das System oder Mobilfunknetz so konfiguriert ist, dass:
-- das Benutzergerät (20) Funksignale empfängt, die den Rundfunkkanal der bestimmten Basisstationseinheit (111) anzeigen,
-- zu einem nachfolgenden Zeitpunkt und bei Initiierung einer Verbindung des Benutzergeräts (20) mit der bestimmten Basisstationseinheit (111) das Benutzergerät (20) als Teil des Verbindungsverfahrens mindestens eine Funkressourcensteuerungsnachricht an die bestimmte Basisstationseinheit (111) überträgt, wobei das Benutzergerät (20) die bestimmte Abdeckungszeitinformation als Teil der mindestens einen Funkressourcensteuerungsnachricht überträgt und
wobei die bestimmte Abdeckungszeitinformation den bestimmten Zeitpunkt angibt, zu dem das Benutzergerät (20) die empfangenen Funksignale der bestimmten Basisstationseinheit (111) als ausreichend stark erkennt.

10. Programm, umfassend einen computerlesbaren Programmcode, der, wenn er auf einem Benutzergerät (20) ausgeführt wird, das Benutzergerät (20) veranlasst, ein Verfahren nach einem der Ansprüche 1 bis 7 auszuführen.

11. Computerlesbares Medium, umfassend Anweisungen, die, wenn sie auf einem Benutzergerät (20) ausgeführt werden, das Benutzergerät (20) veranlassen, ein Verfahren nach einem der Ansprüche 1 bis 7 auszuführen.

## Revendications

1. Procédé de communication d'un équipement utilisateur (20) avec une entité de station de base (111) spécifique d'un réseau d'accès radio (110) d'un réseau de communication mobile (100), ou associé ou attribué à un réseau de communication mobile (100), dans lequel l'équipement utilisateur (20) reçoit, de l'entité de station de base (111), des informations système dans le cadre d'un canal de diffusion ou en utilisant un canal de diffusion,
dans lequel une information de temps de couverture spécifique indiquant un moment spécifique où l'équipement utilisateur (20) est fourni, par l'entité de station de base (111) spécifique, avec une couverture radio suffisamment forte, doit être transmise, par l'équipement utilisateur (20), à l'entité de station de base (111) spécifique,
dans lequel, afin de déterminer le moment spécifique où l'équipement utilisateur (20) est fourni avec une couverture radio suffisamment forte par l'entité de station de base (111) spécifique et afin de pouvoir transmettre l'information de temps de couverture spécifique, le procédé exécuté par l'équipement utilisateur (20) comprend les étapes suivantes :
-- dans une première étape, l'équipement utilisateur (20) reçoit des signaux radio indicatifs du canal de diffusion de l'entité de station de base (111) spécifique,
**--** dans une deuxième étape, à un moment ultérieur et lors de l'initiation par l'équipement utilisateur (20) d'être connecté avec l'entité de station de base (111) spécifique, l'équipement utilisateur (20) transmet, dans le cadre de la procédure d'établissement de connexion, au moins un message de contrôle des ressources radio à l'entité de station de base (111) spécifique, dans lequel l'équipement utilisateur (20) transmet l'information de temps de couverture spécifique dans le cadre du au moins un message de contrôle des ressources radio et dans lequel l'information de temps de couverture spécifique indique le moment spécifique où l'équipement utilisateur (20) détecte les signaux radio reçus de l'entité de station de base (111) spécifique comme étant suffisamment forts.

2. Procédé selon la revendication 1, dans lequel l'équipement utilisateur (20) est, au moins avant d'initier d'être connecté avec l'entité de station de base (111) spécifique, en mode veille.

3. Procédé selon l'une des revendications précédentes, dans lequel l'équipement utilisateur (20) démarre un temporisateur lors de la détection des signaux radio reçus de l'entité de station de base (111) spécifique comme étant suffisamment forts,
dans lequel en particulier les signaux radio reçus sont considérés comme étant suffisamment forts si au moins l'un des critères suivants est rempli :
-- les signaux radio reçus de l'entité de station de base (111) spécifique correspondent au critère S ou le dépassent,
-- les signaux radio reçus de l'entité de station de base (111) spécifique correspondent au critère de sélection de cellule ou le dépassent,
**--** les signaux radio reçus de l'entité de station de base (111) spécifique correspondent au critère de resélection de cellule concernant l'entité de station de base (111) spécifique ou le dépassent,
dans lequel en particulier, l'équipement utilisateur reçoit d'une autre entité de station de base spécifique soit du réseau d'accès radio (110) soit d'un réseau d'accès radio d'un autre réseau de communication mobile, ou associé ou attribué à un autre réseau de communication mobile, d'autres informations système dans le cadre d'un autre canal de diffusion ou en utilisant un autre canal de diffusion, dans lequel une autre information de temps de couverture spécifique indiquant un autre moment spécifique où l'équipement utilisateur (20) est fourni, par l'autre entité de station de base spécifique, avec une couverture radio suffisamment forte, doit être transmise, par l'équipement utilisateur (20), à l'autre entité de station de base spécifique, dans lequel l'équipement utilisateur (20) démarre un autre temporisateur lors de la détection des signaux radio reçus de l'autre entité de station de base spécifique comme étant suffisamment forts, et, le cas échéant, lors de l'initiation par l'équipement utilisateur (20) d'être connecté avec l'autre entité de station de base spécifique, l'équipement utilisateur (20) transmet, dans le cadre de la procédure d'établissement de connexion respective, l'autre information de temps de couverture spécifique dans le cadre d'au moins un autre message de contrôle des ressources radio à l'autre entité de station de base spécifique.

4. Procédé selon l'une des revendications précédentes, dans lequel, dans le cadre des informations système que l'équipement utilisateur (20) reçoit de l'entité de station de base (111) spécifique dans le cadre du canal de diffusion ou en utilisant le canal de diffusion, l'équipement utilisateur (20) reçoit une indication spécifique concernant la transmission de l'information de temps de couverture spécifique et/ou dans lequel,
dans le cadre des autres informations système que l'équipement utilisateur (20) reçoit de l'autre entité de station de base spécifique dans le cadre de l'autre canal de diffusion ou en utilisant l'autre canal de diffusion, l'équipement utilisateur (20) reçoit une autre indication spécifique concernant la transmission de l'autre information de temps de couverture spécifique,
dans lequel en particulier l'indication spécifique **--** ou l'autre indication spécifiqueindique l'un de deux cas possibles, dans lequel dans l'un des deux cas, l'indication spécifique **--** ou l'autre indication spécifique **--** indique que l'information de temps de couverture spécifique **--** ou l'autre information de temps de couverture spécifiquedoit être transmise par l'équipement utilisateur (20) et dans lequel dans l'autre des deux cas, l'indication spécifique **--** ou l'autre indication spécifique **--** indique que l'information de temps de couverture spécifique **--** ou l'autre information de temps de couverture spécifique **--** ne doit pas être transmise par l'équipement utilisateur (20),
dans lequel en particulier **--** dans le cas où l'autre indication spécifique, reçue par l'équipement utilisateur (20), indique que l'autre information de temps de couverture spécifique ne doit pas être transmise par l'équipement utilisateur (20) **--** lors de l'initiation par l'équipement utilisateur (20) d'être connecté avec l'autre entité de station de base spécifique, l'équipement utilisateur (20) transmet le au moins un autre message de contrôle des ressources radio à l'autre entité de station de base spécifique sans l'autre information de temps de couverture spécifique dans le cadre du au moins un autre message de contrôle des ressources radio.

5. Procédé selon l'une des revendications précédentes, dans lequel le au moins un message de contrôle des ressources radio correspond à au moins l'un des éléments suivants :
-- message de demande d'établissement de contrôle des ressources radio,
-- message de finalisation d'établissement de contrôle des ressources radio.

6. Procédé selon l'une des revendications précédentes, dans lequel l'information de temps de couverture spécifique correspond à :
-- une indication absolue du moment spécifique, ou à
-- une indication relative du moment spécifique, en particulier relative au moment ultérieur où l'équipement utilisateur (20) initie d'être connecté avec l'entité de station de base (111) spécifique,
dans lequel en particulier l'entité de station de base (111) spécifique et/ou le réseau de communication mobile (100) est capable, au moins approximativement, de déterminer, sur la base de la connaissance de l'information de temps de couverture spécifique et en particulier sur la base d'une valeur d'estimation de décalage Doppler associée à l'équipement utilisateur (20), où se trouve l'équipement utilisateur (20) et combien de temps l'équipement utilisateur (20) sera encore situé dans la zone de couverture radio de l'entité de station de base (111) spécifique.

7. Procédé selon l'une des revendications précédentes, dans lequel l'entité de station de base (111) spécifique correspond à :
-- une entité de station de base terrestre, en particulier faisant partie d'un réseau d'accès radio (110) terrestre du réseau de communication mobile (100),
**--** une entité de station de base non terrestre, en particulier étant, au moins partiellement, ou concernant au moins une partie de sa fonctionnalité, en particulier sa fonctionnalité d'antenne, à bord d'un satellite ou d'une plateforme à haute altitude, dans lequel en particulier, et sur la base de la réception de l'information de temps de couverture spécifique indiquant le moment spécifique, l'entité de station de base (111) spécifique est configurée pour déduire la période de temps de service restante probable après le moment ultérieur où l'équipement utilisateur (20) initie d'être connecté avec l'entité de station de base (111) spécifique.

8. Équipement utilisateur (20) pour communiquer avec une entité de station de base (111) spécifique d'un réseau d'accès radio (110) d'un réseau de communication mobile (100), dans lequel l'équipement utilisateur (20) est configuré pour recevoir, de l'entité de station de base (111) spécifique, des informations système dans le cadre d'un canal de diffusion ou en utilisant un canal de diffusion,
dans lequel une information de temps de couverture spécifique indiquant un moment spécifique où l'équipement utilisateur (20) est fourni, par l'entité de station de base (111) spécifique, avec une couverture radio suffisamment forte, doit être transmise de l'équipement utilisateur (20) à l'entité de station de base (111) spécifique,
dans lequel, afin de déterminer le moment spécifique où l'équipement utilisateur (20) est fourni avec une couverture radio suffisamment forte par l'entité de station de base (111) spécifique et afin de pouvoir transmettre l'information de temps de couverture spécifique, l'équipement utilisateur (20) est configuré de telle sorte que :
-- l'équipement utilisateur (20) reçoit des signaux radio indicatifs du canal de diffusion de l'entité de station de base (111) spécifique,
-- à un moment ultérieur et lors de l'initiation par l'équipement utilisateur (20) d'être connecté avec l'entité de station de base (111) spécifique, l'équipement utilisateur (20) transmet, dans le cadre de la procédure de connexion, au moins un message de contrôle des ressources radio à l'entité de station de base (111) spécifique, dans lequel l'équipement utilisateur (20) transmet l'information de temps de couverture spécifique dans le cadre du au moins un message de contrôle des ressources radio et dans lequel l'information de temps de couverture spécifique indique le moment spécifique où l'équipement utilisateur (20) détecte les signaux radio reçus de l'entité de station de base (111) spécifique comme étant suffisamment forts.

9. Système ou réseau de communication mobile (100) pour la communication d'un équipement utilisateur (20) avec une entité de station de base (111) spécifique d'un réseau d'accès radio (110) du réseau de communication mobile (100), le système ou réseau de communication mobile comprenant l'équipement utilisateur (20) et l'entité de station de base (111) spécifique, dans lequel l'entité de station de base (111) spécifique est configurée pour transmettre des informations système dans le cadre d'un canal de diffusion ou en utilisant un canal de diffusion,
dans lequel une information de temps de couverture spécifique, indiquant un moment spécifique où l'équipement utilisateur (20) est fourni, par l'entité de station de base (111) spécifique, avec une couverture radio suffisamment forte, doit être transmise, par l'équipement utilisateur (20), à l'entité de station de base (111) spécifique,
dans lequel, afin de déterminer le moment spécifique où l'équipement utilisateur (20) est fourni avec une couverture radio suffisamment forte par l'entité de station de base (111) spécifique et afin de pouvoir transmettre l'information de temps de couverture spécifique, le système ou réseau de communication mobile est configuré de telle sorte que :
-- l'équipement utilisateur (20) reçoit des signaux radio indicatifs du canal de diffusion de l'entité de station de base (111) spécifique,
-- à un moment ultérieur et lors de l'initiation par l'équipement utilisateur (20) d'être connecté avec l'entité de station de base (111) spécifique, l'équipement utilisateur (20) transmet, dans le cadre de la procédure de connexion, au moins un message de contrôle des ressources radio à l'entité de station de base (111) spécifique, dans lequel l'équipement utilisateur (20) transmet l'information de temps de couverture spécifique dans le cadre du au moins un message de contrôle des ressources radio et dans lequel l'information de temps de couverture spécifique indique le moment spécifique où l'équipement utilisateur (20) détecte les signaux radio reçus de l'entité de station de base (111) spécifique comme étant suffisamment forts.

10. Programme comprenant un code de programme lisible par ordinateur qui, lorsqu'il est exécuté sur un équipement utilisateur (20), amène l'équipement utilisateur (20) à exécuter un procédé selon l'une des revendications 1 à 7.

11. Support lisible par ordinateur comprenant des instructions qui, lorsqu'elles sont exécutées sur un équipement utilisateur (20), amènent l'équipement utilisateur (20) à exécuter un procédé selon l'une des revendications 1 à 7.
